# EUROPÄISCHE PATENTANMELDUNG

(11) **EP 2 857 113 A1**
(43) Veröffentlichungstag der Anmeldung: **08.04.2015**
(21) Anmeldenummer: 14184720.2
(22) Anmeldetag: 15.09.2014
(51) Int. Cl.: B08B 7/00, B29B 13/08, B29D 30/00, B29C 33/72, B29D 30/06

(54) **Verfahren zum Reinigen einer Oberfläche eines Hohlraums**

(30) Priorität: 02.10.2013 DE 102013220066
(71) Anmelder: 4JET Technologies GmbH, 52477 Alsdorf (DE)
(72) Erfinder: Lange, André, 52072 Aachen (DE); Lindenau, Frank, 52349 Düren (DE)
(74) Vertreter: Bauer, Dirk

(57) **Zusammenfassung**

Offenbart ist ein Verfahren zum Reinigen einer Oberfläche eines Hohlraums in einer Reifenform (16) oder in einem Reifen mittels einer Reinigungsvorrichtung, wobei zunächst eine Symmetrieachse (18) der Reifenform (16) bzw. des Reifen und die Reinigungsvorrichtung zueinander ausgerichtet, sodann eine Mehrzahl von Startpositionen eines Prozesskopfs (5) der Reinigungsvorrichtung (1) eingerichtet und schließlich nacheinander in den Startpositionen ein Laserstrahl (13) aus dem Prozesskopf (5) auf die Oberfläche fokussiert und der Prozesskopf (5) auf jeweils einer Kreisbahn um die Symmetrieachse (18) und dabei der Laserstrahl (13) über die Oberfläche geführt wird.

Um das Einrichten der Startpositionen zu vereinfachen wird vorgeschlagen, dass zunächst ein gerader Kreiszylinder (21) um die Symmetrieachse (18) bestimmt wird, innerhalb dessen der Prozesskopf (5) auf jeder der Kreisbahnen einen Sicherheitsabstand (22) zu der Oberfläche einhält, und dass die Startpositionen innerhalb des Kreiszylinders (21) eingerichtet werden.

## Beschreibung

Die Erfindung betrifft ein Verfahren zum Reinigen einer Oberfläche eines Hohlraums in einer Reifenform oder in einem Reifen mittels einer Reinigungsvorrichtung, wobei zunächst eine Symmetrieachse der Reifenform bzw. des Reifen und die Reinigungsvorrichtung zueinander ausgerichtet, sodann eine Mehrzahl von Startpositionen eines Prozesskopfs der Reinigungsvorrichtung eingerichtet und schließlich nacheinander in den Startpositionen ein Laserstrahl aus dem Prozesskopf auf die Oberfläche fokussiert und der Prozesskopf auf jeweils einer Kreisbahn um die Symmetrieachse und dabei der Laserstrahl über die Oberfläche geführt wird.

Reifenformen dienen zur Herstellung eines Luftreifen für ein Fahrzeug, beispielsweise für einen PKW oder LKW, für eine Baumaschine oder für ein Flugzeug. Solche Reifenformen weisen -je nach Verwendungszweck - bis zu mehrere Zentimeter tiefe Profilierungen auf. Zur Herstellung des Reifens wird der aus vorgefertigten Einzelteilen zusammengesetzte Reifenrohling (auch: "grüner Reifen") in die Reifenform eingelegt und unter hohem Druck und bei einer Temperatur von etwa 180 °C in einer Heizpresse "gebacken". Das Material der Lauffläche (ein Gemisch aus im Wesentlichen Kautschuk, Silica, Ruß und Schwefel) fließt hierbei in die Profilierung, vulkanisiert und bildet das Oberflächenprofil des fertigen Reifen. Nach dem Ausformen in der Reifenform verbleibende Ablagerungen vermindern die Qualität von nachfolgend in derselben Reifenform gefertigten Reifen.

Die Oberfläche des Hohlraum einer Reifenform oder eines Reifen weist die Form eines am inneren Radius aufgeschnittenen Torus auf. Neben der speziellen Mechanik und der Steuerung der verwendeten Vorrichtung für die Reinigung solcher Geometrien stellt das Entfernen der Ablagerungen hohe Anforderungen an die Reinigungswirkung: Bekannt ist insbesondere die Reinigung durch Sand-, Trockeneis- und Laserstrahlen.

Mit denselben Vorrichtungen und Verfahren können auch Reifen an ihrer Innenseite von Produktionsrückständen befreit werden.

Ein Verfahren der einleitend genannten Art ist bekannt aus dem TMCS ("Tire Mould Cleaning System") der Anmelderin zum Reinigen von Reifenformen. In dem bekannten Verfahren wird zum Einrichten einer jeden Startposition zunächst der Prozesskopf manuell zu der Startposition verfahren, ein Pilotlaserstrahl aus dem Prozesskopf auf die Oberfläche der Reifenform gerichtet, und der Prozesskopf unter Beobachten des Pilotlaserstrahls auf einen Startpunkt auf der Oberfläche ausgerichtet. Dann wird der Abstand des Prozesskopfs zu dem Startpunkt gemessen und mit der Stellung des Prozesskopfs als Startposition gespeichert.

Aus JP H11 99 524 A und JP H09 277 272 A gehen Verfahren zum Reinigen einer Oberfläche eines Hohlraums in einer Reifenform als bekannt hervor. EP 1 604 809 A1 und EP 2 674 287 A1 befassen sich mit Verfahren zum Reinigen einer Oberfläche eines Hohlraums in einem Reifen.

Das manuelle Einrichten der Startpositionen erfordert höchste Konzentration, weil einerseits der Prozesskopf in einem optimalen Abstand zur Oberfläche stehen soll und andererseits eine Kollision mit der Oberfläche in Form eines auf der Innenseite geöffneten Torus beim Einrichten unbedingt zu vermeiden ist.

### Aufgabe

Der Erfindung liegt die Aufgabe zugrunde, die Einrichtung der Startpositionen zu vereinfachen.

### Lösung

Ausgehend von dem bekannten Verfahren wird nach der Erfindung vorgeschlagen, dass zunächst ein gerader Kreiszylinder um die Symmetrieachse bestimmt wird, innerhalb dessen der Prozesskopf auf jeder der Kreisbahnen einen Sicherheitsabstand zu der Oberfläche einhält, und dass die Startpositionen innerhalb des Kreiszylinders eingerichtet werden. Die Beschränkung der einstellbaren Startpositionen auf das Innere eines solchen Kreiszylinders vermeidet auf besonders einfache Weise jede Kollision des Prozesskopfs mit der Oberfläche.

Der Kreiszylinder kann in einem erfindungsgemäßen Verfahren manuell durch Eingabe seines Radius definiert, oder aus bekannten Parametern und/oder gemessenen Punktkoordinaten der Oberfläche berechnet werden. In einem erfindungsgemäßen Verfahren können die Startpositionen - wie im bekannten Stand der Technik - manuell eingerichtet werden. Alternativ kann die Definition des Kreiszylinders den Ausgangspunkt einer automatischen Einrichtung der Startpositionen bilden.

In einem erfindungsgemäßen Verfahren zum Reinigen einer Reifenform wird vorzugsweise zum Ausrichten der Prozesskopf mit einer Längsachse parallel zu der Symmetrieachse in den Hohlraum geführt und werden in einer senkrecht zu der Symmetrieachse angeordneten Messebene in mehreren Richtungen Abstände des Prozesskopfs von der Oberfläche gemessen, und aus den gemessenen Abständen eine Lage der Symmetrieachse in der Messebene bestimmt und der Prozesskopf oder die Reifenform bzw. der Reifen derart verschoben, dass die Längsachse mit der Symmetrieachse zusammenfällt. Reifenformen zeichnen sich durch eine derart strenge Rotationssymmetrie aus, dass in jeder senkrecht zur Symmetrieachse liegenden Messebene anhand von Abstandsmessungen in drei unabhängigen Richtungen die Lage der Reifenform zu der Längsachse bestimmt werden kann. Die Messung der Abstände in nur einer einzelnen Messebene ermöglicht ein besonders schnelles Ausrichten des Prozesskopfs ohne Abstriche bei der Zuverlässigkeit der Messergebnisse.

In einem solchen erfindungsgemäßen Verfahren wird bevorzugt ein Radius des Kreiszylinders aus den Abständen und dem Sicherheitsabstand berechnet. So kann die Anzahl der erforderlichen Abstandsmessungen reduziert werden.

Vorteilhafter Weise weist in einem solchen erfindungsgemäßen Verfahren in der Messebene die Oberfläche einen minimalen Abstand zu der Symmetrieachse auf.

An Reifenformen ist die Oberfläche mit dem minimalen Abstand zur Symmetrieachse ein oberer Rand, der in der Reifenpresse an einem entsprechenden Stempel anliegt. Während die anderen Messebenen das Reifenprofil aufweisen, ist dieser Rand nicht profiliert und besonders für die Abstandsmessung zum Ausrichten des Prozesskopfs geeignet.

Insbesondere kann bei einer Abstandsmessung an diesem oberen Rand aus den gemessenen Abständen und den Winkeln der jeweiligen Messungen zueinander zunächst der Radius dieses Rands berechnet und um den Sicherheitsabstand vermindert werden, um den Radius des Kreiszylinders zu bestimmen.

In einem solchen erfindungsgemäßen Verfahren werden besonders bevorzugt zum Ausrichten in mehreren senkrecht zu der Symmetrieachse angeordneten Testebenen in einer der Richtungen Testabstände des Prozesskopfs von der Oberfläche gemessen, und wird als Messebene eine Testebene mit einem minimalen Testabstand gewählt. Aufgrund der strengen Rotationssymmetrie einer Reifenform bestimmt die Testebene mit dem minimalen Testabstand unabhängig sowohl von einer Verschiebung der Reinigungsvorrichtung zur Reifenform als auch von der gewählten Richtung eindeutig die Messebene mit dem minimalen Radius.

In einem erfindungsgemäßen Verfahren ist vorteilhafter Weise die Oberfläche in der Messebene glatt, weist also insbesondere kein Reifenprofil auf. In anderen Messebenen kann das Reifenprofil die Abstandsmessung stören und zu fehlerhaften Messergebnissen führen. Alternativ kann bei Abstandsmessungen in einer Messebene im Bereich des Reifenprofils der Fehler durch eine gesteigerte Anzahl der Messpunkte vermindert werden.

In einem erfindungsgemäßen Verfahren wird besonders bevorzugt zum Ausrichten ein Abstand des Prozesskopfs von einem Boden der Reifenform gemessen, und zum Einrichten der Startpositionen der Prozesskopf bis zu dem Boden geführt. In einem solchen erfindungsgemäßen Verfahren wird die tiefste mögliche Startposition besonders einfach ermittelt.

In einem solchen erfindungsgemäßen Verfahren werden vorzugsweise nach Verschieben des Prozesskopfs oder der Reifenform in mehreren Abständen von der Symmetrieachse Bodenabstände des Prozesskopfs von dem Boden gemessen, und hält eine Grundfläche des Kreiszylinders bei einem minimalen Bodenabstand den Sicherheitsabstand zu dem Boden ein. So halten der Mantel und der Boden des Kreiszylinders denselben Sicherheitsabstand zu der Oberfläche ein.

In einem solchen erfindungsgemäßen Verfahren wird eine Mehrzahl weiterer Startpositionen des Prozesskopfs eingerichtet und nacheinander in den weiteren Startpositionen der Laserstrahl auf den Boden fokussiert und der Prozesskopf auf jeweils einer Kreisbahn um die Symmetrieachse und dabei der Laserstrahl über den Boden geführt. So kann auch die Oberfläche im Boden der Reifenform gereinigt werden.

In einer besonders vorteilhaften Ausprägung eines erfindungsgemäßen Verfahrens zur Reinigung einer Reifenform oder eines Reifen wird für jede der Startpositionen und/oder der weiteren Startpositionen aus einer Beschreibung einer Kontur der Oberfläche ein Abstand des Prozesskopfs von einem zugeordneten Punkt auf der Oberfläche berechnet, auf den der Laserstrahl fokussiert wird. Die Kontur kann in beispielsweise als Volumenmodell, in Form einer Punktwolke oder in Form von numerischen Parametern einer vorgegebenen Funktion bestimmt sein.

Alternativ kann in einem erfindungsgemäßen Verfahren zum Einrichten für jede der Startpositionen und/oder der weiteren Startpositionen ein Abstand des Prozesskopfs von einem zugeordneten Punkt auf der Oberfläche gemessen und gespeichert werden, auf den der Laserstrahl fokussiert wird.

### Ausführungsbeispiel

Die Erfindung wird nachfolgend anhand von zwei Ausführungsbeispielen erläutert. Es zeigen
Fig. 1 a/b eine Reinigungsvorrichtung zum Ausführen eines erfindungsgemäßen Verfahren,
Fig. 2 ein freies Ende des Prozesskopfs der Reinigungsvorrichtung,
Fig. 3 die Reinigungsvorrichtung mit einer Reifenform und
Fig. 4 die Reinigungsvorrichtung mit einem Reifen.

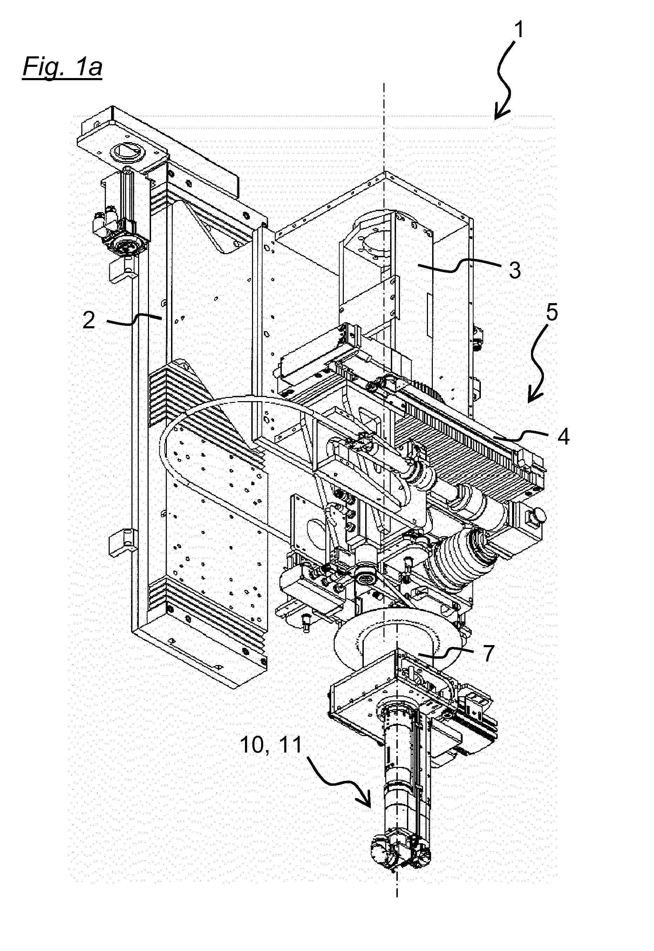

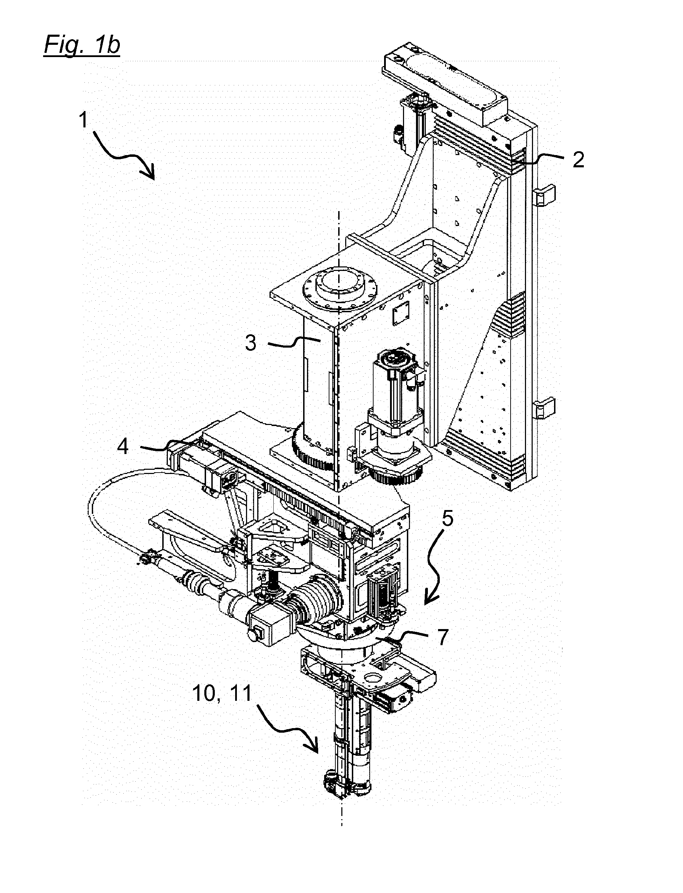

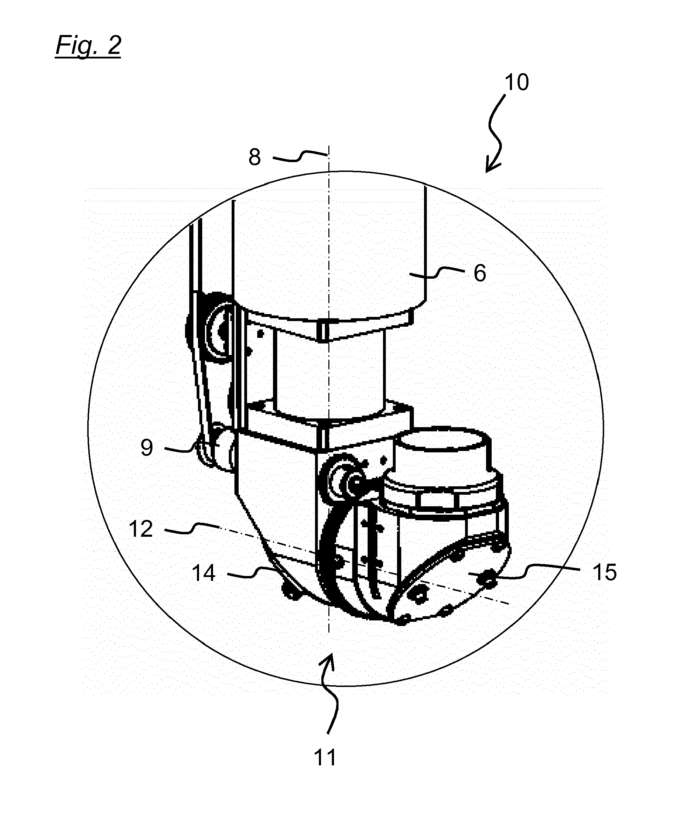

Die in den Figuren 1 a und 1 b sowie in Figur 2 gezeigte Reinigungsvorrichtung 1 weist an einem nicht dargestellten Gestell zunächst einen Hubantrieb 2, an dem Hubantrieb 2 einen Drehantrieb 3, an dem Drehantrieb 3 einen Radialantrieb 4 und an dem Radialantrieb 4 einen Prozesskopf 5 auf.

Der Prozesskopf 5 der Reinigungsvorrichtung 1 besteht im Wesentlichen aus einem Rohr 6 und weist einen Längsachsantrieb 7 auf, mittels dessen das Rohr 6 um seine Längsachse 8 rotierbar ist. Außerdem weist der Prozesskopf 5 einen Querachsantrieb 9 auf, mittels dessen ein am freien Ende 10 des Rohrs 6 angebrachtes Austrittselement 11 um eine quer zu der Längsachse 8 liegende Querachse 12 rotierbar ist. Durch Rotieren um Längsachse 8 und Querachse 12 kann das Austrittselement 11 in jede Raumrichtung ausgerichtet werden.

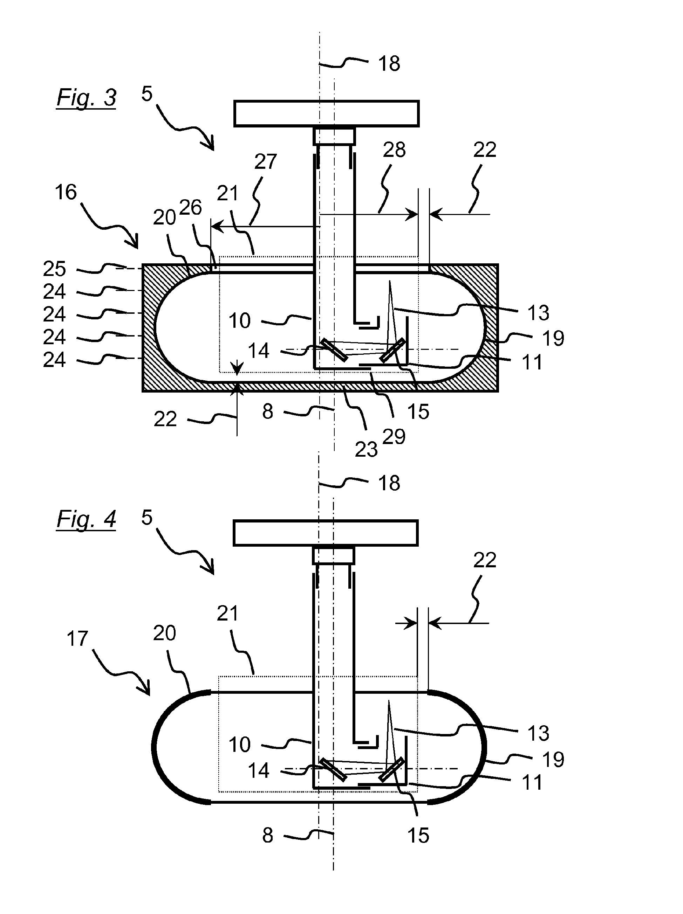

Die Reinigungsvorrichtung 1 weist einen nicht dargestellten Infrarot-Scheibenlaser auf mit einer gepulsten Lichtleistung von etwa 750 *W* und einer Wellenlänge von etwa 1030 *nm.* Ein (erst in den Figuren 3 und 4 dargestellter) Laserstrahl 13 aus dem Laser wird am freien Ende 10 des Rohrs 6 mittels eines ersten Spiegels 14 in Richtung der Querachse 12 und in dem Austrittselement 11 mittels eines zweiten Spiegels 15 in die gewünschte Raumrichtung jeweils um einen rechten Winkel umgelenkt.

Die Reinigungsvorrichtung 1 weist weiterhin eine nicht dargestellte Stelloptik für den Laserstrahl 13 auf, nämlich im Wesentlichen eine Sammellinse, mittels derer der Abstand eines Fokuspunkts des Laserstrahls 13 von dem Austrittselement 11 einstellbar ist.

Unter dem Gestell weist die Reinigungsvorrichtung 1 einen gleichfalls nicht dargestellten, horizontal verfahrbaren Werkstücktisch auf, auf dem unterschiedliche Körper abgelegt und mit ihrer (in den folgenden Figuren gezeigten) Symmetrieachse 18 koaxial zum Drehantrieb 3 ausgerichtet werden können.

Eine erste beispielhafte Anwendung der Reinigungsvorrichtung 1 illustriert Figur 3: Auf dem Werkstücktisch ist eine nur stilisiert dargestellte Reifenform 16 abgelegt, mittels derer in einer Heizpresse ein Luftreifen für einen Kraftwagen aus einem Reifenrohling "gebacken" werden kann. In einer zweiten beispielhaften Anwendung liegt gemäß Figur 4 auf dem Werkstücktisch ein gleichfalls stilisierter Reifen 17, nämlich ein Luftreifen für einen Kraftwagen. Die Reifenform 16 und der Reifen 17 weisen jeweils eine im Wesentlichen parallel zu ihrer Symmetrieachse 18 liegende, zylinderförmige Lauffläche 19 und eine im Wesentlichen quer zur Lauffläche 19 verlaufende Seitenwand 20 auf. In den Figuren 3 und 4 sind der Strahlenverlauf des Laserstrahls 13 und die zur Strahlformung erforderliche Optik vereinfacht dargestellt.

Zunächst werden die Symmetrieachse 18 der Reifenform 16 bzw. des Reifen 17 und die Reinigungsvorrichtung 1 zueinander ausgerichtet und ein gerader Kreiszylinder 21 um die Symmetrieachse 18 bestimmt, innerhalb dessen der Prozesskopf 5 auf jeder Kreisbahn um die Längsachse 8 einen Sicherheitsabstand 22 zu der Oberfläche einhält.

Dann werden Startpositionen des Prozesskopfs 5 innerhalb des Kreiszylinders 21 eingerichtet. Zu jeder Startposition werden die Einstellungen der Antriebe und der Stelloptik in einem Steuerungsmodul der Reinigungsvorrichtung 1 gespeichert.

Anschließend wird der Prozesskopf 5 nacheinander anhand der gespeicherten Einstellungen mittels des Hubantriebs 2 parallel und mittels des Radialantriebs 4 radial zu der Symmetrieachse 18 auf die Startpositionen zugestellt und mittels Längsachsantrieb 7 und Querachsantrieb 9 das Austrittselement 11 rotiert, um den Laserstrahl 13 auf den zugehörigen Auftreffpunkt auf der Oberfläche auszurichten, und der Laserstrahl 13 mittels der Stelloptik auf den Auftreffpunkt fokussiert.

Anschließend wird der Prozesskopf 5 mittels des Drehantriebs 3 um die Symmetrieachse 18 rotiert, so dass der Prozesskopf 5 ausgehend von der Startposition eine Kreisbahn um die Symmetrieachse 18 innerhalb des Kreiszylinders 21 beschreibt. Hierbei beschreibt der Laserstrahl 13 ausgehend von dem Auftreffpunkt eine Kreisbahn auf der Oberfläche und reinigt diese.

Für die Reinigung der Reifenform 16 wird zum automatisierten Ausrichten zunächst der Prozesskopf 5 mit seiner Längsachse 8 parallel zu der Symmetrieachse 18 von oben bis zum Boden 23 der Reifenform 16 in den Hohlraum geführt. Dabei wird in mehreren senkrecht zu der Symmetrieachse 18 angeordneten Testebenen 24 in einer für alle Messungen gleichen Richtung der Abstand des Prozesskopfs 5 von der Oberfläche gemessen.

Diejenige Testebene 24, in der der Abstand des Prozesskopfs 5 von der Oberfläche den kleinsten gemessenen Wert aufweist, wird als Messebene 25 definiert. In dieser werden in zwei weiteren Richtungen Abstände des Prozesskopfs 5 von der Oberfläche gemessen. Die Messebene 25 schneidet einen oberen Rand 26 der Reifenform 16, an dem die Oberfläche glatt ist, also insbesondere kein die Messung störendes Reifenprofil aufweist.

Aus den in der Messebene 25 gemessenen Abständen und den Winkeln der Richtungen wird die Lage der Symmetrieachse 18 der Reifenform 16 in der Messebene 25 berechnet und die Reifenform 16 derart verschoben, dass die Längsachse 8 des Prozesskopfs 5 mit der Symmetrieachse 18 zusammenfällt.

Außerdem wird aus den in der Messebene 25 gemessenen Abständen und den Winkeln der Richtungen der Abstand 27 der Oberfläche von der Symmetrieachse 18 berechnet und um den Sicherheitsabstand 22 von 5 mm vermindert: So wird der Radius 28 des Kreiszylinders 21 bestimmt.

Anschließend wird in der tiefsten Testebene 24 in mehreren Abständen von der Symmetrieachse 18 jeweils der Abstand des Prozesskopfs 5 vom Boden 23 gemessen. Der geringste gemessene Abstand vom Boden 23 wird wiederum um den Sicherheitsabstand 22 vermindert. In der so berechneten Höhe wird eine Grundfläche 29 des Kreiszylinders 21 definiert.

Für die Reinigung des Reifen 17 wird eine mathematische Beschreibung der Kontur der Oberfläche zugrundegelegt und für jede der Startpositionen aus der

Beschreibung ein Abstand des Prozesskopfs 5 von einem zugeordneten Punkt auf der Oberfläche berechnet, auf den der Laserstrahl 13 fokussiert wird.

In den Figuren sind
- 1: Reinigungsvorrichtung
- 2: Hubantrieb
- 3: Drehantrieb
- 4: Radialantrieb
- 5: Prozesskopf
- 6: Rohr
- 7: Längsachsantrieb
- 8: Längsachse
- 9: Querachsantrieb
- 10: Ende
- 11: Austrittselement
- 12: Querachse
- 13: Laserstrahl
- 14: Spiegel
- 15: Spiegel
- 16: Reifenform
- 17: Reifen
- 18: Symmetrieachse
- 19: Lauffläche
- 20: Seitenwand
- 21: Kreiszylinder
- 22: Sicherheitsabstand
- 23: Boden
- 24: Testebene
- 25: Messebene
- 26: Rand
- 27: Abstand
- 28: Radius
- 29: Grundfläche

## Patentansprüche

1. Verfahren zum Reinigen einer Oberfläche eines Hohlraums in einer Reifenform (16) oder in einem Reifen (17) mittels einer Reinigungsvorrichtung (1), wobei zunächst eine Symmetrieachse (18) der Reifenform (16) bzw. des Reifen (17) und die Reinigungsvorrichtung (1) zueinander ausgerichtet, sodann eine Mehrzahl von Startpositionen eines Prozesskopfs (5) der Reinigungsvorrichtung (1) eingerichtet und schließlich nacheinander in den Startpositionen ein Laserstrahl (13) aus dem Prozesskopf (5) auf die Oberfläche fokussiert und der Prozesskopf (5) auf jeweils einer Kreisbahn um die Symmetrieachse (18) und dabei der Laserstrahl (13) über die Oberfläche geführt wird, ***dadurch gekennzeichnet, dass*** zunächst ein gerader Kreiszylinder (21) um die Symmetrieachse (18) bestimmt wird, innerhalb dessen der Prozesskopf (5) auf jeder der Kreisbahnen einen Sicherheitsabstand (22) zu der Oberfläche einhält, und dass die Startpositionen innerhalb des Kreiszylinders (21) eingerichtet werden.

2. Verfahren nach dem vorgenannten Anspruch, ***dadurch gekennzeichnet, dass*** zum Ausrichten der Prozesskopf (5) mit einer Längsachse (8) parallel zu der Symmetrieachse (18) in den Hohlraum geführt wird und in einer senkrecht zu der Symmetrieachse (18) angeordneten Messebene (25) in mehreren Richtungen Abstände des Prozesskopfs (5) von der Oberfläche gemessen werden, und dass aus den gemessenen Abständen eine Lage der Symmetrieachse (18) in der Messebene (25) bestimmt und der Prozesskopf (5) oder die Reifenform (16) derart verschoben wird, dass die Längsachse (8) mit der Symmetrieachse (18) zusammenfällt.

3. Verfahren nach dem vorgenannten Anspruch, ***dadurch gekennzeichnet, dass*** ein Radius (28) des Kreiszylinders (21) aus den Abständen und dem Sicherheitsabstand (22) berechnet wird.

4. Verfahren nach einem der Ansprüche 2 bis 3, ***dadurch gekennzeichnet, dass*** in der Messebene (25) die Oberfläche einen minimalen Abstand zu der Symmetrieachse (18) aufweist.

5. Verfahren nach dem vorgenannten Anspruch, ***dadurch gekennzeichnet, dass*** zum Ausrichten in mehreren senkrecht zu der Symmetrieachse (18) angeordneten Testebenen (24) in einer der Richtungen Testabstände des Prozesskopfs (5) von der Oberfläche gemessen werden, und dass als Messebene (25) eine Testebene (24) mit einem minimalen Testabstand gewählt wird.

6. Verfahren nach einem der Ansprüche 2 bis 5, ***dadurch gekennzeichnet, dass*** die Oberfläche in der Messebene (25) glatt ist.

7. Verfahren nach einem der Ansprüche 2 bis 6, ***dadurch gekennzeichnet, dass*** zum Ausrichten ein Abstand des Prozesskopfs (5) von einem Boden (23) der Reifenform (16) gemessen, und dass zum Einrichten der Startpositionen der Prozesskopf (5) bis zu dem Boden (23) geführt wird.

8. Verfahren nach dem vorgenannten Anspruch, ***dadurch gekennzeichnet, dass*** nach Verschieben des Prozesskopfs (5) oder der Reifenform (16) in mehreren Abständen von der Symmetrieachse (18) Bodenabstände des Prozesskopfs (5) von dem Boden (23) gemessen werden, und dass eine Grundfläche (29) des Kreiszylinders (21) bei einem minimalen Bodenabstand den Sicherheitsabstand (22) zu dem Boden (23) einhält.

9. Verfahren nach dem vorgenannten Anspruch, ***dadurch gekennzeichnet, dass*** eine Mehrzahl weiterer Startpositionen des Prozesskopfs (5) eingerichtet und nacheinander in den weiteren Startpositionen der Laserstrahl (13) auf den Boden (23) fokussiert und der Prozesskopf (5) auf jeweils einer Kreisbahn um die Symmetrieachse (18) und dabei der Laserstrahl (13) über den Boden (23) geführt wird.

10. Verfahren nach einem der vorgenannten Ansprüche, ***dadurch gekennzeichnet, dass*** für jede der Startpositionen und/oder der weiteren Startpositionen aus einer Beschreibung einer Kontur der Oberfläche ein Abstand des Prozesskopfs (5) von einem zugeordneten Punkt auf der Oberfläche berechnet wird, auf den der Laserstrahl (13) fokussiert wird.
